# FASCICULE DE BREVET EUROPEEN

(11) **EP 4 278 076 B1**
(45) Date de publication et mention de la délivrance du brevet: **01.01.2025**
(21) Numéro de dépôt: 22700010.6
(22) Date de dépôt: 07.01.2022
(51) Int. Cl.: F02C 7/228, F23R 3/34, F02C 7/232, F23R 3/28

(54) **SYSTÈME ET PROCÉDÉ D'ALIMENTATION EN CARBURANT D'UNE CHAMBRE DE COMBUSTION DANS UN TURBOMOTEUR D'AÉRONEF**
SYSTEM UND VERFAHREN ZUR BRENNSTOFFZUFUHR ZU EINER BRENNKAMMER IN EINEM FLUGZEUGTURBINENTRIEBWERK
SYSTEM AND METHOD FOR SUPPLYING FUEL TO A COMBUSTION CHAMBER IN AN AIRCRAFT TURBINE ENGINE

(30) Priorité: 14.01.2021 FR 2100352
(43) Date de publication de la demande: 22.11.2023
(73) Titulaire: SAFRAN AIRCRAFT ENGINES, 75015 Paris (FR)
(72) Inventeur: PEINADO, Jérémy, 77550 MOISSY-CRAMAYEL (FR); SMAGGHE, David Pascal, 77550 MOISSY-CRAMAYEL (FR); BURGUBURU, Joseph Jean Marie, 77550 MOISSY-CRAMAYEL (FR)
(74) Mandataire: Argyma
(86) Numéro de dépôt international: PCT/EP2022/050233
(87) Numéro de publication internationale: WO 2022/152621

(56) Documents cités:
- EP-A1- 2 026 002
- EP-A1- 3 211 200
- US-A- 5 881 550
- US-A1- 2015 369 489

## Description

### Domaine technique

La présente invention concerne le domaine de l'alimentation en carburant d'une chambre de combustion dans un turbomoteur d'aéronef.

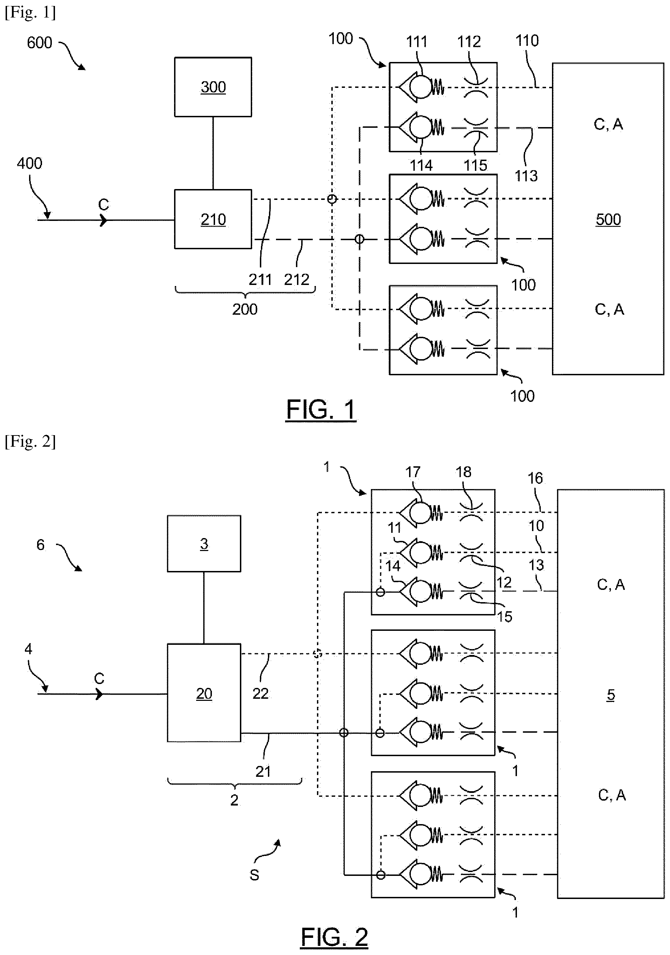

De manière connue, en référence à la [Fig. 1], un aéronef comprend un ou plusieurs turbomoteurs 600 comprenant chacun une chambre de combustion 500 dans laquelle entrent de l'air A et du carburant C configurés pour réagir ensemble suivant une réaction de combustion, de manière à dégager l'énergie nécessaire à la poussée de l'aéronef. L'air A provient de l'extérieur du turbomoteur 600 et est guidé vers la chambre de combustion 500 par une veine d'air (non représentée) tandis que le carburant C provient d'un circuit de carburant 400 débouchant dans la chambre de combustion 500.

Le circuit de carburant 400 comprend un ensemble d'injecteurs 100 configurés pour pulvériser le carburant C sous forme de gouttelettes dans la chambre de combustion 500 ainsi qu'un dispositif de répartition 200 du carburant C dans les injecteurs 100 contrôlé par un organe de commande 300. En amont, le circuit de carburant 400 comprend classiquement les éléments suivants (non représentés), cités dans le sens de l'écoulement du carburant C d'amont en aval : un réservoir de stockage, une pompe basse pression, un organe de filtrage, une pompe haute pression et un dispositif de dosage du débit de carburant C à injecter dans la chambre de combustion 500, usuellement nommé FMU (« Fuel Metering Unit »).

Toujours en référence à la [Fig.1], il est connu un injecteur 100 dit « à double étage » comprenant, d'une part, un étage pilote 110 configuré pour délivrer un débit permanent de carburant C optimisé pour les faibles et moyens régimes du turbomoteur 600, et d'autre part, un étage principal 113 configuré pour délivrer un débit intermittent de carburant C uniquement pour les régimes élevés du turbomoteur 600. L'étage pilote 110 comprend un clapet d'étanchéité 111, configuré pour laisser circuler le carburant C dès qu'une pression suffisante de carburant C dans le circuit est atteinte, ainsi qu'un gicleur 112 configuré pour générer un spray de carburant C au centre de la chambre de combustion 500. Le gicleur 112 est de type à injection aérodynamique, c'est-à-dire que le mélange air-carburant formant le spray est généré par cisaillement du carburant C entre deux tourbillons d'air. Toujours en référence à la [Fig.1], l'étage principal 113 comprend quant à lui un clapet multipoints 114 et un gicleur multipoints 115 comportant un ensemble de points d'injection périphériques situés autour du gicleur 112 de l'étage pilote 110.

De manière connue, toujours en référence à la [Fig.1], le dispositif de répartition 200 comprend un circuit pilote 211 et un circuit principal 212 alimentant en carburant C respectivement l'étage pilote 110 et l'étage principal 113 de chaque injecteur 100. Le dispositif de répartition 200 comprend en outre une vanne de répartition 210 pour répartir le carburant C entre le circuit pilote 211 et le circuit principal 212.

De tels injecteurs 100 à double étage et un tel dispositif de répartition 200 à double circuit forment avantageusement un système d'alimentation en carburant permettant d'optimiser la réaction de combustion pour tout régime du turbomoteur 600, en générant la poussée attendue pour l'aéronef tout en limitant les rejets de gaz brûlés. Toutefois, en cas de défaillance de la vanne de répartition 210 ou de l'organe de commande 300, l'ensemble du carburant C est susceptible d'être dirigé dans un seul circuit 211, 212. S'il s'agit du circuit pilote 211, cela peut conduire à une perte de poussée indésirable du turbomoteur 600. S'il s'agit du circuit principal 212, cela peut altérer le fonctionnement du turbomoteur 600 et éventuellement conduire à un arrêt moteur.

Une solution immédiate pour éviter cet inconvénient serait de redonder et d'augmenter la sécurité de la vanne de répartition 210 et de l'organe de commande 300, afin de prévenir tout risque de défaillance. Une modification de la vanne de répartition 210 ou de l'organe de commande 300 est toutefois complexe et nécessiterait d'augmenter de manière importante l'encombrement et la masse.

Outre l'inconvénient cité précédemment, pour les faibles régimes du turbomoteur 600, l'ensemble du carburant C est dirigé vers le circuit pilote 211, ce qui favorise le risque de cokéfaction (solidification par formation de gomme) du carburant C résiduel dans le circuit principal 212 et dans l'étage principal 113 des injecteurs 100. En outre, pour des régimes élevés, l'envoi d'un débit de carburant C élevé dans l'étage principal 113 des injecteurs est susceptible d'entraîner des instabilités de combustion dans la chambre de combustion 500. On connait des systèmes d'alimentation selon l'art antérieur par les documents US20150369489A1 et EP3211200A1.

L'invention propose ainsi un système et un procédé d'alimentation en carburant de la chambre de combustion permettant de supprimer au moins une partie des inconvénients énoncés.

### PRESENTATION DE L'INVENTION

L'invention concerne un système d'alimentation en carburant d'une chambre de combustion dans un turbomoteur d'aéronef, ledit système d'alimentation comprenant :
- une pluralité d'injecteurs configurés pour injecter le carburant dans la chambre de combustion, chaque injecteur se présentant sous la forme d'un injecteur à trois étages comprenant un premier étage pilote, un second étage pilote et un étage principal, le premier étage pilote et le second étage pilote comprenant respectivement un premier clapet pilote et un second clapet pilote configurés chacun pour laisser circuler un débit permanent de carburant, l'étage principal comprenant un clapet principal configuré pour laisser circuler un débit intermittent de carburant, de manière à adapter l'alimentation de la chambre de combustion suivant le régime du turbomoteur d'aéronef,
- un dispositif de répartition du carburant dans les injecteurs se présentant sous la forme d'un dispositif de répartition à double circuit comprenant un circuit primaire et un circuit secondaire, le circuit primaire étant relié au premier étage pilote et à l'étage principal, le circuit secondaire étant relié au second étage pilote, le dispositif de répartition comprenant une vanne de répartition configurée pour répartir le carburant entre le circuit primaire et le circuit secondaire, et
- un organe de commande de la vanne de répartition suivant le régime du turbomoteur d'aéronef.

Grâce à l'architecture à trois étages des injecteurs et celle à double circuit du dispositif de répartition, le système d'alimentation selon l'invention présente avantageusement une sécurité accrue en cas de défaillance de l'organe de commande et/ou de la vanne de répartition, pouvant aboutir au blocage de la vanne de répartition dans une position de répartition non contrôlée. En effet, même dans le cas où la position de blocage correspond à l'une ou l'autre des deux positions extrêmes de la vanne, ce qui implique que seul le circuit primaire ou le circuit secondaire est alimenté, un étage pilote est systématiquement alimenté. Ainsi, dans l'éventualité où l'ensemble du carburant serait guidé dans le circuit primaire, cela entraînerait un fonctionnement dégradé acceptable diminuant de manière peu significative les performances du turbomoteur d'aéronef. Il y aurait toutefois un risque d'instabilités de combustion et de cokéfaction du carburant dans le circuit secondaire du fait que le carburant n'y circule plus, de tels risques ne pouvant aboutir à un arrêt moteur non-commandé et ayant seulement un impact lors de la maintenance des injecteurs. Dans l'éventualité opposée où l'ensemble du carburant serait guidé vers le circuit secondaire, le turbomoteur d'aéronef fonctionnerait avec une perte de poussée peu importante, en particulier si la perméabilité du circuit secondaire est relativement élevée permettant le passage d'un débit injecté important. Là aussi, ce fonctionnement ne peut pas entraîner un arrêt moteur non-commandé. Ainsi, dans l'éventualité d'une défaillance sur la position de la vanne de répartition, le système d'alimentation de l'invention permet d'en limiter les effets, restreints à une perte de performances modérée.

De plus, l'invention permet avantageusement d'éviter à la fois le risque de cokéfaction et le risque d'instabilités de combustion lors d'un fonctionnement normal de la vanne de répartition. En effet, il est possible en fonctionnement de commander la vanne de répartition dans une position adaptée pour faire circuler du carburant en continu dans le circuit primaire et le circuit secondaire dès que le débit de carburant entrant dans la vanne dépasse des valeurs relativement faibles, ce qui empêche toute cokéfaction du carburant. Par ailleurs, l'architecture à trois étages des injecteurs permet de réduire la pression du carburant dans chaque étage comparativement à l'art antérieur, et notamment dans l'étage principal du fait qu'une partie du débit de carburant est répartie dans le circuit secondaire.

Selon un aspect de l'invention, le premier étage pilote, le second étage pilote et l'étage principal comprennent respectivement un premier gicleur pilote alimenté par le premier clapet pilote, un second gicleur pilote alimenté par le second clapet pilote et un gicleur principal alimenté par le clapet principal. Les gicleurs permettent avantageusement d'injecter le carburant dans la chambre de combustion.

De préférence, le second gicleur pilote comporte une perméabilité supérieure à une perméabilité du premier gicleur pilote, de manière à délivrer un débit adapté pour l'allumage du turbomoteur d'aéronef. On précise que la perméabilité d'un gicleur correspond au débit maximal de carburant qu'il peut injecter dans la chambre de combustion. De manière avantageuse, la faible perméabilité du premier gicleur pilote permet ainsi de délivrer un débit de carburant relativement faible adapté pour l'allumage de la chambre de combustion lors du démarrage du turbomoteur d'aéronef. Par ailleurs, le second gicleur pilote permettant d'injecter davantage de carburant que le premier gicleur pilote, davantage de carburant circule dans la ligne secondaire que dans la ligne primaire, ce qui évite l'ouverture intempestive du clapet principal. Cela évite également de devoir augmenter le tarage du clapet principal et donc la pression dans la ligne primaire.

De préférence, le second gicleur pilote comporte une perméabilité inférieure à une perméabilité du gicleur principal, pour assurer le passage des grands débits de carburant aux régimes élevés du turbomoteur d'aéronef.

Selon un aspect de l'invention, le premier gicleur pilote est de type à injection aérodynamique et est configuré pour injecter un spray de carburant dans la chambre de combustion. Un tel premier gicleur pilote est avantageusement configuré pour former le mélange air-carburant par cisaillement du carburant entre deux tourbillons d'air. De préférence, le premier gicleur pilote est positionné au centre de chaque injecteur, de manière à assurer une alimentation permanente en carburant dans la chambre de combustion.

Selon un aspect de l'invention, le second gicleur pilote est de type à injection aéromécanique et configuré pour injecter un spray de carburant dans la chambre de combustion. De préférence, le second gicleur pilote est positionné de manière périphérique dans chaque injecteur, préférentiellement autour du premier gicleur pilote. Un tel gicleur permet avantageusement de mettre sous pression le carburant pour l'injecter sous forme de spray. Préférentiellement, le second gicleur pilote forme un anneau autour du premier gicleur pilote, de manière à s'étendre de manière concentrique. Les deux gicleurs pilotes assurent ainsi ensemble l'injection permanente de carburant dans la chambre de combustion, suffisante pour les faibles et moyens régimes.

Selon un aspect de l'invention, le gicleur principal se présente sous la forme d'un gicleur multipoints comprenant une pluralité de points d'injection, lesdits points d'injection étant de préférence positionnés de manière périphérique dans chaque injecteur, préférentiellement autour du premier gicleur pilote. De manière avantageuse, le gicleur principal est configuré pour injecter du carburant de manière auxiliaire aux deux gicleurs pilotes lors des régimes élevés du turbomoteur d'aéronef.

Selon un aspect de l'invention, le premier clapet pilote est un clapet d'étanchéité, de préférence dépourvu de fonction de dosage. Un tel premier clapet pilote permet avantageusement d'assurer simplement l'étanchéité du premier étage pilote lorsque le moteur est à l'arrêt ou avant l'allumage de la chambre de combustion.

Selon un aspect préféré, le second clapet pilote est un clapet d'étanchéité, de préférence dépourvu de fonction de dosage. Un tel second clapet pilote permet avantageusement d'assurer simplement l'étanchéité du second étage pilote lorsque le moteur est à l'arrêt ou avant l'allumage de la chambre de combustion.

Selon un autre aspect préféré, le clapet principal est un clapet multipoints. Un tel clapet principal permet avantageusement d'assurer l'alimentation de chacun des points d'injection du gicleur principal.

Selon un aspect de l'invention, le clapet principal comporte un tarage supérieur à un tarage du premier clapet pilote, de manière à délivrer un débit de carburant uniquement au-dessus d'une pression prédéterminée dans l'étage principal correspondant à des débits de carburant élevés, c'est-à-dire à un régime de turbomoteur élevé ou alternativement moyen avec accélération. Ainsi, bien que le clapet principal et le premier clapet pilote soient reliés à la même ligne primaire, seul le premier clapet pilote est configuré pour laisser passer du carburant lorsque la pression de la ligne primaire est inférieure à la pression prédéterminée de tarage du clapet principal. Ceci permet de limiter l'injection aux deux clapets pilotes pour les faibles régimes du turbomoteur d'aéronef.

On précise que le tarage d'un clapet correspond à la pression minimale de carburant dans l'étage à partir de laquelle le clapet est configuré pour s'ouvrir et laisser passer du carburant. Dans le cas d'un clapet à ressort par exemple, un ressort est prévu pour maintenir une bille en appui contre un siège d'étanchéité, le tarage du ressort étant fonction de sa raideur et de la compression du ressort dans l'installation.

Selon un aspect de l'invention, le premier clapet pilote comporte un tarage sensiblement égal à un tarage du second clapet pilote, de manière à assurer l'étanchéité du carburant du premier étage pilote et du second étage pilote à l'arrêt moteur ou dans les phases de démarrage avant l'allumage de la chambre de combustion. On précise que le terme « sensiblement » signifie qu'il y a un écart d'au plus 10% entre les deux valeurs de tarage.

Selon un autre aspect de l'invention, le second clapet pilote est un clapet doseur et le second étage pilote comprend un clapet d'étanchéité. De préférence, ledit second clapet pilote est positionné en aval du clapet d'étanchéité du second étage pilote. De préférence également, ledit second clapet pilote comporte un tarage supérieur à un tarage du clapet d'étanchéité du second étage pilote. Préférentiellement, le clapet d'étanchéité du second étage pilote comporte un tarage sensiblement égal à celui du premier clapet pilote. L'utilisation combinée d'un clapet d'étanchéité et d'un clapet doseur permet de maintenir une pression peu élevée dans le second étage pilote tout en contrôlant le débit carburant traversant le clapet doseur.

Selon un aspect, le second étage pilote comprend un conduit anti-cokéfaction débouchant d'une part entre le second clapet pilote et le clapet d'étanchéité du second étage pilote, et d'autre part à l'amont du système d'alimentation, de manière à permettre la circulation du carburant via le clapet d'étanchéité lorsque le second clapet pilote est fermé. L'utilisation d'un conduit anti-cokéfaction permet la circulation du carburant même à faible pression, le clapet d'étanchéité étant ouvert mais le clapet doseur, i.e. le second clapet pilote, étant fermé.

L'invention concerne également un circuit de carburant de turbomoteur d'aéronef comprenant un système d'alimentation tel que décrit précédemment, le circuit de carburant étant configuré pour alimenter en carburant le dispositif de répartition.

L'invention concerne également l'ensemble d'un système d'alimentation tel que décrit précédemment et d'une chambre de combustion de turbomoteur d'aéronef, les injecteurs du système d'alimentation débouchant dans la chambre de combustion de manière à l'alimenter en carburant.

L'invention concerne également l'ensemble d'une chambre de combustion et d'un circuit de carburant de turbomoteur d'aéronef, le circuit de carburant comprenant un système d'alimentation tel que décrit précédemment et étant configuré pour alimenter en carburant le dispositif de répartition, les injecteurs du système d'alimentation débouchant dans la chambre de combustion de manière à l'alimenter en carburant.

L'invention concerne en outre un turbomoteur d'aéronef comprenant une chambre de combustion et un système d'alimentation tel que décrit précédemment, les injecteurs du système d'alimentation débouchant dans la chambre de combustion de manière à l'alimenter en carburant.

L'invention concerne en outre un turbomoteur d'aéronef comprenant une chambre de combustion et un circuit de carburant comprenant un système d'alimentation tel que décrit précédemment, le circuit de carburant étant configuré pour alimenter en carburant le dispositif de répartition, les injecteurs du système d'alimentation débouchant dans la chambre de combustion de manière à l'alimenter en carburant.

L'invention concerne de plus un aéronef comprenant au moins un turbomoteur tel que décrit précédemment.

L'invention concerne par ailleurs un procédé d'alimentation en carburant d'une chambre de combustion dans un turbomoteur d'aéronef au moyen du système d'alimentation tel que décrit précédemment, le procédé comprenant :
- une étape de commande de la vanne de répartition suivant le régime du turbomoteur d'aéronef, au moyen de l'organe de commande,
- une étape de répartition du carburant entre le circuit primaire et le circuit secondaire, au moyen de la vanne de répartition et
- une étape d'injection du carburant dans la chambre de combustion, au moyen des injecteurs,
- procédé dans lequel, pour tout régime du turbomoteur d'aéronef, une fois le turbomoteur démarré, la vanne de répartition guide du carburant à la fois dans le circuit primaire et dans le circuit secondaire lors de l'étape de répartition.

De manière avantageuse, un tel procédé d'alimentation est efficace pour tout régime de fonctionnement du turbomoteur d'aéronef grâce à une architecture d'injecteurs à trois étages et renforce la sécurité en cas de défaillance grâce à son architecture à double circuit reliés chacun à un étage pilote. Un tel procédé permet notamment de réduire le risque de cokéfaction du carburant car les deux circuits sont alimentés en permanence en carburant.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique du système d'alimentation en carburant de la chambre de combustion dans un turbomoteur d'aéronef selon l'art antérieur ;
La [Fig.2] est une représentation schématique du système d'alimentation en carburant de la chambre de combustion dans un turbomoteur d'aéronef selon une forme de réalisation de l'invention ;
La [Fig.3A] est une représentation schématique d'un injecteur du système d'alimentation de la [Fig.2] ;
La [Fig.3B] est une représentation schématique des gicleurs de l'injecteur de la [Fig.3A] ;
La [Fig.4] est une représentation schématique du procédé d'alimentation en carburant de la chambre de combustion dans un turbomoteur d'aéronef selon une forme de réalisation de l'invention ;
La [Fig.5A] est une représentation schématique des étapes de répartition et d'injection du carburant dans un injecteur du procédé de la [Fig.4], lorsque le régime du turbomoteur d'aéronef est faible ;
La [Fig.5B] est une représentation schématique des étapes de répartition et d'injection du carburant dans un injecteur du procédé de la [Fig.4], lorsque le régime du turbomoteur d'aéronef est élevé ;
La [Fig.6A] et la [Fig.6B] sont deux représentations schématiques de l'étape d'injection du carburant dans un injecteur du procédé de la [Fig.4], lors de deux cas de défaillance de l'étape de commande et/ou de répartition ; et
La [Fig.7] est une représentation schématique d'un injecteur selon une forme de réalisation alternative de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la [Fig.2], l'invention concerne un aéronef qui comprend un ou plusieurs turbomoteurs 6 comprenant chacun une chambre de combustion 5 dans laquelle entrent de l'air A et du carburant C configurés pour réagir ensemble suivant une réaction de combustion, de manière à dégager l'énergie nécessaire à la poussée de l'aéronef. L'air A provient de l'extérieur du turbomoteur 6 et est guidé vers la chambre de combustion 5 par une veine d'air (non représentée) tandis que le carburant C provient d'un circuit de carburant 4 débouchant dans la chambre de combustion 5. Le circuit de carburant 4 comprend les éléments suivants (non représentés), cités dans le sens de l'écoulement du carburant C d'amont en aval : un réservoir de stockage, une pompe basse pression, un organe de filtrage, une pompe haute pression et un dispositif de dosage du débit de carburant C à injecter dans la chambre de combustion 5, usuellement nommé FMU (« Fuel Metering Unit »).

Toujours en référence à la [Fig.2] et selon l'invention, le circuit de carburant 4 comprend également, en aval, un système d'alimentation S en carburant C de la chambre de combustion 5 qui comprend :
- des injecteurs 1 débouchant dans la chambre de combustion 5,
- un dispositif de répartition 2 du carburant C dans les injecteurs 1 et
- un organe de commande 3 du dispositif de répartition 2.

Selon l'invention, comme illustré sur la [Fig.2], chaque injecteur 1 comprend trois étages, à savoir un premier étage pilote 10, un second étage pilote 16 et un étage principal 13. Le premier étage pilote 10 et le second étage pilote 16 comprennent respectivement un premier clapet pilote 11 et un second clapet pilote 17 configurés chacun pour laisser circuler un débit permanent de carburant C. L'étage principal 13 comprend quant à lui un clapet principal 14 configuré pour laisser circuler un débit intermittent de carburant C, de manière à adapter l'alimentation de la chambre de combustion 5 en fonction du régime du turbomoteur d'aéronef 6. En pratique, le premier clapet pilote 11 et le second clapet pilote 17 sont adaptés pour s'ouvrir lorsque le turbomoteur 6 est allumé, à savoir à partir d'une faible pression de carburant C dans le circuit de carburant 4. Le clapet principal 14 est quant à lui adapté pour s'ouvrir à partir d'une pression relativement élevée de carburant C dans le circuit de carburant 4, correspondant à un régime élevé de turbomoteur d'aéronef 6 ou alternativement un régime moyen avec accélération.

En référence à la [Fig.2], le premier étage pilote 10, le second étage pilote 16 et l'étage principal 13 comprennent en outre respectivement un premier gicleur pilote 12, un second gicleur pilote 18 et un gicleur principal 15. Chaque gicleur 12, 15, 18 est monté en aval du clapet 11, 14, 17 associé par rapport au sens de circulation du carburant C dans le système d'alimentation S. Chaque gicleur 12, 15, 18 est configuré pour injecter le carburant C ayant traversé le clapet 11, 14, 17 associé dans la chambre de combustion 5.

Toujours selon l'invention et en référence à la [Fig.2], le dispositif de répartition 2 comprend deux circuits à savoir un circuit primaire 21 relié au premier étage pilote 10 et à l'étage principal 13 ainsi qu'un circuit secondaire 22 relié au second étage pilote 16. Le dispositif de répartition 2 comprend en outre une vanne de répartition 20 configurée pour répartir le carburant C entre le circuit primaire 21 et le circuit secondaire 22. L'organe de commande 3 est quant à lui relié au dispositif de répartition 2 et configuré pour commander le déplacement de la vanne de répartition 20 en fonction du régime du turbomoteur d'aéronef 6 de manière à adapter l'alimentation en carburant C de la chambre de combustion 5.

De manière avantageuse, l'organe de commande 3 et le dispositif de répartition 2 sont analogues à l'art antérieur, ce qui permet de bénéficier des avantages de l'invention par simple adaptation d'un système d'alimentation selon l'art antérieur.

Dans l'exemple de la [Fig.2], seuls trois injecteurs 1 sont représentés par souci de clarté et de concision mais il va de soi que le nombre d'injecteurs 1 est quelconque, de préférence supérieur à dix et inférieur à trente. Le dispositif de répartition 2 est quant à lui de préférence unique, de même que l'organe de commande 3.

Par ailleurs, dans le cadre de l'invention, chaque injecteur 1 comprend uniquement trois étages 10, 13, 16 et le dispositif de répartition 2 comprend uniquement deux circuits 21, 22. Le circuit primaire 21 et le circuit secondaire 22 sont reliés à chaque injecteur 1. Chaque circuit 21, 22 se divise au niveau d'un noeud en plusieurs voies d'acheminement reliées chacune à un injecteur 1 donné. Dans l'exemple de la [Fig.2], le circuit primaire 21 et le circuit secondaire 22 se divisent ainsi chacun en trois voies d'acheminement, le nombre de voies d'acheminement étant égal au nombre d'injecteurs 1. Les voies d'acheminement sont de préférence identiques de manière à répartir de manière équitable le carburant C entre les différents injecteurs 1. Ainsi, de manière analogue à l'art antérieur, chaque injecteur 1 est relié à un circuit primaire 21 et à un circuit secondaire 22.

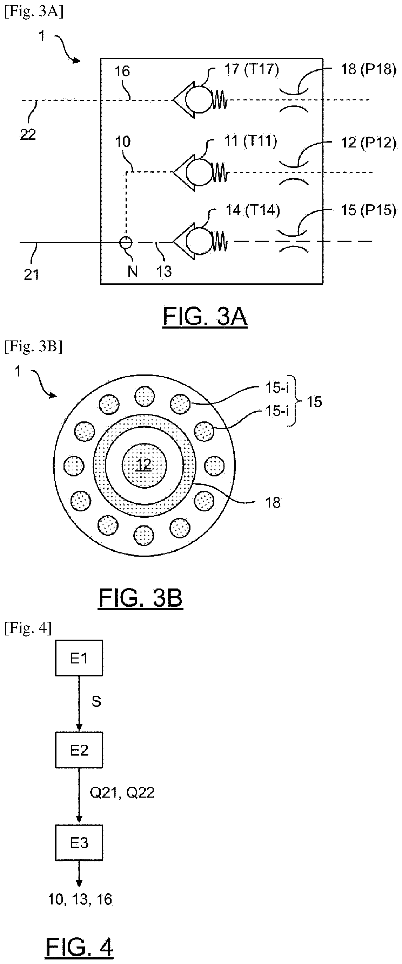

En référence à la [Fig.3A] et comme décrit précédemment, chaque injecteur 1 comprend trois clapets 11, 14, 17, à savoir deux clapets pilotes 11, 17 permettant l'injection permanente de carburant C et un clapet principal 14 permettant l'injection intermittente de carburant C. Plus précisément, le clapet principal 14 est configuré pour s'ouvrir de manière complémentaire aux clapets pilotes 11, 17, ceci afin d'assurer une alimentation suffisante en carburant C lors des régimes élevés du turbomoteur d'aéronef 6. Les clapets pilotes 11, 17 permettent quant à eux d'assurer ensemble une alimentation suffisante en carburant C pour les faibles régimes du turbomoteur d'aéronef 6. La présence de deux clapets pilotes 11, 17 au lieu d'un seul dans l'art antérieur permet en outre de garantir la stabilité de la flamme aux régimes élevés.

Toujours en référence à la [Fig.3A], le premier clapet pilote 11 et le second clapet pilote 17 sont alimentés de manière séparée en carburant C, à savoir respectivement par le circuit primaire 21 et le circuit secondaire 22. En cas de défaillance de la vanne de répartition 20 ou de l'organe de commande 3 conduisant l'ensemble du carburant C dans l'un ou l'autre des deux circuits 21, 22, ceci limite les conséquences à une perte de poussée non significative. En effet, peu importe le circuit 21, 22 où est envoyé l'intégralité du carburant C, celui-ci est conduit dans un des clapets pilote 11, 17, ce qui élimine le risque d'arrêt moteur.

Comme illustré sur la [Fig.3A], le circuit primaire 21 alimente à la fois le premier clapet pilote 11 et le clapet principal 14, en se divisant en deux voies au niveau d'un noeud N interne à chaque injecteur 1, l'une des voies correspondant au premier étage pilote 10, l'autre à l'étage principal 13. Ceci permet de limiter le nombre de circuits 21, 22 du dispositif de répartition 2 à deux. En outre, ceci évite tout risque de cokéfaction du carburant C dans les circuits 21, 22 du fait que ceux-ci alimentent en permanence les clapets pilotes 11, 17.

De préférence, le premier clapet pilote 11 se présente sous la forme d'un clapet d'étanchéité, configuré pour assurer l'étanchéité du premier étage pilote 10 lorsque le turbomoteur 6 est à l'arrêt ou avant l'allumage de la chambre de combustion 5. Selon un aspect préféré, le second clapet pilote 17 se présente également sous la forme d'un clapet d'étanchéité pour les mêmes raisons. De préférence, le clapet principal 14 se présente quant à lui sous la forme d'un clapet multipoints configuré pour alimenter l'ensemble des points d'injection du gicleur principal 15 comme ce sera décrit par la suite.

En référence à la [Fig.3A], chacun des clapets 11, 14, 17 comporte un tarage T11, T14, T17 qui correspond à la pression minimale du carburant C dans l'étage 10, 13, 16 à partir de laquelle le clapet 11, 14, 17 est configuré pour l'injecter dans la chambre de combustion 5. De préférence, le tarage T14 du clapet principal 14 est supérieur au tarage T11 du premier clapet pilote 11. Ceci permet de gérer indépendamment le carburant C délivré par le clapet principal 14 et le premier clapet pilote 11, bien qu'ils soient tous deux alimentés par le circuit primaire 21. En pratique, en-dessous d'une pression prédéterminée dans le circuit primaire 21, à savoir pour les faibles régimes du turbomoteur d'aéronef, seul le premier clapet pilote 11 laisse circuler du carburant C. Au-dessus de ladite pression prédéterminée, à savoir pour des régimes élevés du turbomoteur d'aéronef, le premier clapet pilote 11 et le clapet principal 14 laissent tous deux circuler du carburant C. Préférentiellement, la pression prédéterminée est supérieure à 2 bars et inférieure à 4 bars. Dans l'exemple précédent de deux clapets pilotes 11, 17 de même type, le tarage T11, T17 des clapets pilotes 11, 17 est sensiblement égal et faible, de manière à délivrer en permanence le carburant C dans la chambre de combustion 5, notamment lorsque la pression dans le circuit primaire 21 et le circuit secondaire 22 est faible. De manière alternative, le second clapet pilote 17 pourrait se présenter sous une autre forme qu'un clapet d'étanchéité, tel qu'un clapet doseur configuré pour doser le carburant C en fonction de la pression dans le circuit de carburant 4 et associé à un clapet d'étanchéité comme ce sera vu par la suite.

De préférence, le premier gicleur pilote 12 est de type à injection aérodynamique, c'est-à-dire qu'il est configuré pour générer un spray de carburant C par cisaillement du carburant C entre deux tourbillons d'air. De préférence également, le second gicleur pilote 18 est de type à injection aéromécanique, c'est-à-dire qu'il est configuré pour générer un spray par mise sous pression du carburant C. Le premier gicleur pilote 12 et le second gicleur pilote 18 comportent ainsi une structure différente, ce qui permet de d'assurer une bonne combustion dans l'ensemble de leur plage de fonctionnement (des faibles régimes aux régimes moyens). Dans l'exemple de la [Fig.3B], le premier gicleur pilote 12 est positionné au centre de l'injecteur 1. Le second gicleur pilote 18 est quant à lui positionné de manière périphérique au premier gicleur pilote 12 et se présente dans cet exemple sous la forme d'un anneau concentrique au premier gicleur pilote 12. Le spray généré par le second gicleur pilote 18 permet ainsi de compléter celui du premier gicleur pilote 12.

Toujours en référence à la [Fig.3B], le gicleur principal 15 comprend de préférence un ensemble de points d'injection 15-i de carburant C. Dans l'exemple de la [Fig.3B], les points d'injection 15-i du gicleur principal 15 sont positionnés de manière périphérique sur chaque injecteur 1. Dans cet exemple, les points d'injection 15-i sont répartis selon un anneau concentrique aux gicleurs pilotes 12, 18 et s'étendant extérieurement à ceux-ci.

En référence à la [Fig.3A], chacun des gicleurs 12, 15, 18 comporte une perméabilité P12, P15, P18 qui correspond au débit maximal du carburant C pouvant être injecté par le gicleur 12, 15, 18. De préférence, la perméabilité P12 du premier gicleur pilote 12 est inférieure à la perméabilité P18 du second gicleur pilote 18, ce qui revient à dire que la perméabilité du premier étage pilote 10 est inférieure à la perméabilité du second étage pilote 16, de manière à pouvoir injecter un faible débit lors de l'allumage du turbomoteur d'aéronef 6. Ceci permet également, aux faibles régimes, d'injecter le carburant C majoritairement à partir du second étage pilote 16 et donc de limiter la pression dans le circuit primaire 21 pour éviter toute ouverture du clapet principal 14. De préférence également, la perméabilité P15 du gicleur principal 15 est la plus grande, de manière à pouvoir délivrer un débit élevé de carburant C lors des régimes élevés du turbomoteur d'aéronef 6.

Pour résumer, le système d'alimentation S de l'invention présente une sécurité renforcée grâce à des injecteurs à trois étages, dont deux étages pilotes 10, 16 et un étage principal 13, ainsi qu'un dispositif de répartition 2 du carburant C à double circuit. Les étages pilotes 10, 16 garantissent en effet la stabilité de la flamme aux régimes élevés du turbomoteur d'aéronef 6 et sont alimentés séparément pour assurer un mode dégradé acceptable en cas de défaillance dans la répartition du carburant C. Le premier étage pilote 10 et l'étage principal 13 sont quant à eux alimentés par le même circuit primaire 21 pour éviter tout risque de cokéfaction. Un système d'alimentation en carburant selon l'art antérieur peut ainsi être transformé en le système S de l'invention par simple modification des injecteurs 1.

On décrit par la suite un procédé d'alimentation de la chambre de combustion 5 au moyen du système d'alimentation S précédemment exposé.

En référence à la [Fig.4] et selon l'invention, le procédé débute par une étape de commande E1, au cours de laquelle l'organe de commande 3 transmet un signal de commande S à la vanne de répartition 20 qui est fonction du régime du turbomoteur d'aéronef 6. Autrement dit, l'organe de commande 3 contrôle la position de la vanne de répartition 20 et l'adapte en fonction principalement du régime du turbomoteur d'aéronef 6.

Comme illustré sur la [Fig.4], une fois la vanne de répartition 20 positionnée, le procédé comporte ensuite une étape de répartition E2 du carburant C entre le circuit primaire 21 et le circuit secondaire 22. En pratique, peu importe le régime du turbomoteur d'aéronef 6, hors période d'allumage et hors cas de défaillance, la vanne de répartition 20 guide du carburant C à la fois dans le circuit primaire 21 et dans le circuit secondaire 22 afin que les clapets pilotes 11, 17 puissent alimenter de manière permanente la chambre de combustion 5. Autrement dit, la position de la vanne de répartition 20 régule la proportion relative Q21, Q22 de carburant C transmise au circuit primaire 21 et au circuit secondaire 22.

Toujours en référence à la [Fig.4], une fois le carburant C réparti entre le circuit primaire 21 et le circuit secondaire 22, le procédé comporte une étape d'injection E3, au cours de laquelle chaque injecteur 1 délivre du carburant C dans la chambre de combustion 5. Plus précisément, l'étape d'injection E3 est mise en oeuvre par les gicleurs pilotes 12, 18 en complément ou non du gicleur principal 15 suivant le régime du turbomoteur d'aéronef 6.

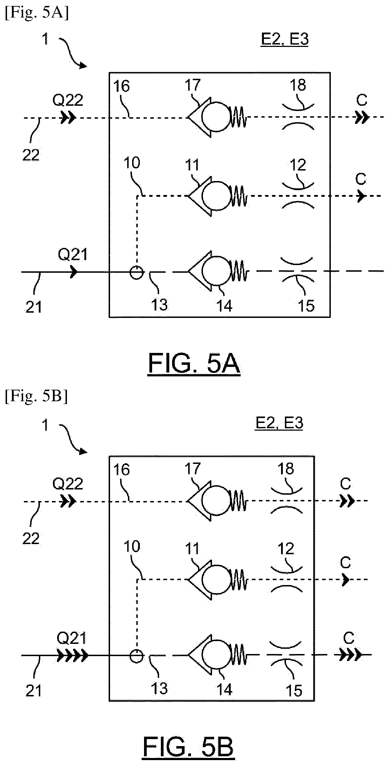

Dans l'exemple de la [Fig.5A] illustrant le procédé d'alimentation de l'invention dans le cas d'un faible régime du turbomoteur d'aéronef 6, la vanne de répartition 20 est positionnée de manière à répartir E2 le carburant C en plus grande proportion Q22 dans le circuit secondaire 22 et en plus petite proportion Q21 dans le circuit primaire 21. Seuls les clapets pilotes 11, 17 sont ouverts du fait de leur faible tarage T11, T17, pour permettre aux gicleurs pilotes 12, 18 d'injecter E3 le carburant C dans la chambre de combustion 5. Autrement dit, la pression dans le circuit primaire 21 et le circuit secondaire 22 est inférieure à la pression prédéterminée de tarage T14 du clapet principal 14. Par ailleurs, l'étape d'injection E3 est mise en oeuvre majoritairement par le second gicleur pilote 18, celui-ci ayant une plus grande perméabilité P18 que le premier gicleur pilote 12.

Dans l'exemple de la [Fig.5B] illustrant le procédé d'alimentation de l'invention dans le cas d'un régime élevé du turbomoteur d'aéronef 6, la vanne de répartition 20 est positionnée de manière à répartir E2 le carburant C en plus grande proportion Q21 dans le circuit primaire 21 et en plus petite proportion Q22 dans le circuit secondaire 22. L'ensemble des gicleurs 12, 15, 18 injectent E3 ensuite le carburant C dans la chambre de combustion 5. Autrement dit, la pression dans le circuit primaire 21 et le circuit secondaire 22 est supérieure à la pression prédéterminée de tarage T14 du clapet principal 14, et donc de celle des clapets pilotes 11, 17. Par ailleurs, l'étape d'injection E3 est mise en oeuvre majoritairement par le gicleur principal 15 de plus grande perméabilité P15.

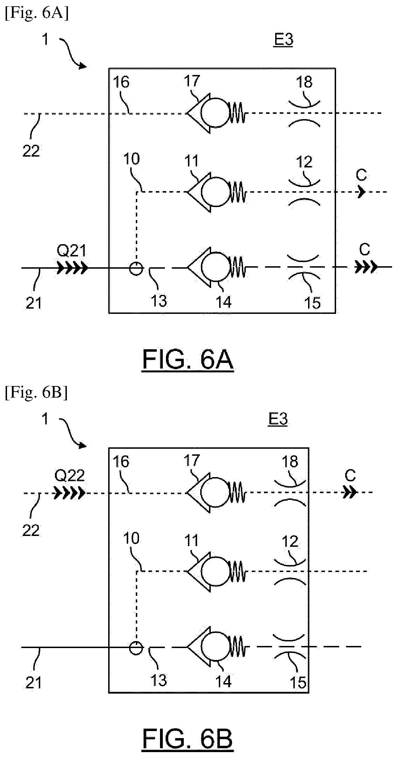

De manière avantageuse, le procédé d'alimentation permet ainsi d'optimiser l'alimentation de la chambre de combustion 5 en fonction du régime du turbomoteur d'aéronef 6, en déplaçant la vanne de répartition 20 et en exploitant les différences de tarage T11, T14, T17 des clapets 11, 14, 17 et de perméabilité P12, P15, P18 des gicleurs associés 12, 15, 18 dans chaque injecteur 1. Par ailleurs, comme illustré sur les figures 6A et 6B, en cas de défaillance lors de l'étape de commande E1 et/ou lors de l'étape de répartition E2, un mode dégradé acceptable est garanti car chaque circuit 21, 22 est relié à un étage pilote 10, 16. En effet, dans l'exemple de la [Fig.6A] où l'ensemble du débit de carburant Q21 est guidé dans le circuit primaire 21, le carburant C est injecté par le premier gicleur pilote 12 et le gicleur principal 15, ce qui entraîne une faible perte de poussée. Dans l'exemple opposé de la [Fig.6B] où l'ensemble du débit de carburant Q22 est guidé dans le circuit secondaire 22, le carburant C est injecté uniquement par le second gicleur pilote 18, de plus grande perméabilité P18 que le premier gicleur pilote 12, ce qui entraîne une perte de poussée réduite.

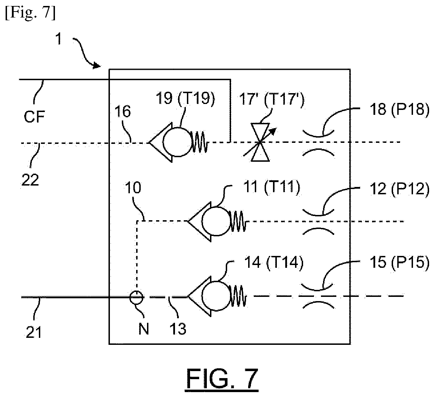

La [Fig.7] illustre une forme de réalisation alternative de l'invention différant de celle précédente en ce que le second clapet pilote 17' est un clapet doseur et l'étage pilote 16 comprend également un clapet d'étanchéité 19 et un conduit anti-cokéfaction CF. Comme illustré sur la [Fig.7], le second clapet pilote 17' est positionné en aval du clapet d'étanchéité 19 de manière à alimenter le second gicleur pilote 18. Le second clapet pilote 17', i.e. le clapet doseur, comporte un tarage T17' supérieur à un tarage T19 du clapet d'étanchéité 19. Le conduit anti-cokéfaction CF se présente sous la forme d'un conduit de fuite et débouche d'une part dans le second étage pilote 16 entre le second clapet pilote 17 et le clapet auxiliaire 19, et d'autre part, à l'amont du système d'alimentation S. De manière avantageuse, le clapet d'étanchéité 19 et le premier clapet pilote 11 peuvent comporter des tarages T11, T19 sensiblement égaux, à savoir faibles, ce qui permet de faire circuler du carburant C dans le second étage pilote 16 dès les faibles régimes du turbomoteur d'aéronef 6. Le conduit anti-cokéfaction CF permet quant à lui une fuite contrôlée du carburant C hors du second étage pilote 16 lorsque la pression dans le circuit de carburant 14 est supérieure à celle de tarage T19 du clapet d'étanchéité 19 mais inférieure à celle de tarage T17' du second clapet pilote 17'. Autrement dit, lorsque le clapet d'étanchéité 19 est ouvert mais que le second clapet pilote 17' est fermé, du carburant C circule via le conduit anti-cokéfaction CF. La circulation contrôlée du carburant C au sein du clapet d'étanchéité 19, alors que le second clapet pilote 17' est fermé, permet de refroidir le clapet d'étanchéité 19 et d'éviter ainsi la cokéfaction du carburant C.

## Revendications

1. Système d'alimentation (S) en carburant (C) d'une chambre de combustion (5) dans un turbomoteur d'aéronef (6), ledit système d'alimentation (S) comprenant :
• une pluralité d'injecteurs (1) configurés pour injecter le carburant (C) dans la chambre de combustion (5), chaque injecteur (1) se présentant sous la forme d'un injecteur à trois étages comprenant un premier étage pilote (10), un second étage pilote (16) et un étage principal (13), le premier étage pilote (10) et le second étage pilote (16) comprenant respectivement un premier clapet pilote (11) et un second clapet pilote (17, 17') configurés chacun pour laisser circuler un débit permanent de carburant (C), l'étage principal (13) comprenant un clapet principal (14) configuré pour laisser circuler un débit intermittent de carburant (C), de manière à adapter l'alimentation de la chambre de combustion (5) suivant le régime du turbomoteur d'aéronef (6),
• un dispositif de répartition (2) du carburant (C) dans les injecteurs (1) se présentant sous la forme d'un dispositif de répartition à double circuit comprenant un circuit primaire (21) et un circuit secondaire (22), le circuit primaire (21) étant relié au premier étage pilote (10) et à l'étage principal (13), le circuit secondaire (22) étant relié au second étage pilote (16), le dispositif de répartition (2) comprenant une vanne de répartition (20) configurée pour répartir le carburant (C) entre le circuit primaire (21) et le circuit secondaire (22), et
• un organe de commande (3) de la vanne de répartition (20) suivant le régime du turbomoteur d'aéronef (6).

2. Système d'alimentation (S) selon la revendication 1, dans lequel le premier étage pilote (10), le second étage pilote (16) et l'étage principal (13) comprennent respectivement un premier gicleur pilote (12) alimenté par le premier clapet pilote (11), un second gicleur pilote (18) alimenté par le second clapet pilote (17, 17') et un gicleur principal (15) alimenté par le clapet principal (14), le second gicleur pilote (18) ayant de préférence une perméabilité (P18) supérieure à une perméabilité (P12) du premier gicleur pilote (12), et préférentiellement inférieure à une perméabilité (P15) du gicleur principal (15).

3. Système d'alimentation (S) selon la revendication 2, dans lequel le premier gicleur pilote (12) est de type à injection aérodynamique et configuré pour injecter un spray de carburant (C) dans la chambre de combustion (5), ledit premier gicleur pilote (12) étant de préférence positionné au centre de chaque injecteur (1).

4. Système d'alimentation (S) selon l'une des revendications 2 et 3, dans lequel le second gicleur pilote (18) est de type à injection aéromécanique et configuré pour injecter un spray de carburant (C) dans la chambre de combustion (5), ledit second gicleur pilote (18) étant de préférence positionné de manière périphérique dans chaque injecteur (1), préférentiellement autour du premier gicleur pilote (12).

5. Système d'alimentation (S) selon l'une des revendications 2 à 4, dans lequel le gicleur principal (15) se présente sous la forme d'un gicleur multipoints comprenant une pluralité de points d'injection, lesdits points d'injection étant de préférence positionnés de manière périphérique dans chaque injecteur (1), préférentiellement autour du premier gicleur pilote (12).

6. Système d'alimentation (S) selon l'une des revendications 1 à 5, dans lequel le premier clapet pilote (11) est un clapet d'étanchéité, de préférence dépourvu de fonction de dosage.

7. Système d'alimentation (S) selon l'une des revendications 1 à 6, dans lequel le clapet principal (14) comporte un tarage (T14) supérieur à un tarage (T11) du premier clapet pilote (11), de manière à délivrer un débit de carburant (C) uniquement au-dessus d'une pression prédéterminée dans l'étage principal (13).

8. Système d'alimentation (S) selon l'une des revendications 1 à 7, dans lequel le premier clapet pilote (11) comporte un tarage (T11) sensiblement égal à un tarage (T17) du second clapet pilote (17).

9. Système d'alimentation (S) selon l'une des revendications 1 à 8, dans lequel le second clapet pilote (17') est un clapet doseur et le second étage pilote (16) comprend un clapet d'étanchéité (19), ledit second clapet pilote (17') étant de préférence positionné en aval du clapet d'étanchéité (19), ledit second clapet pilote (17') comportant préférentiellement un tarage (T17') supérieur à un tarage (T19) du clapet d'étanchéité (19).

10. Système d'alimentation (S) selon la revendication 9, dans lequel le second étage pilote (16) comprend un conduit anti-cokéfaction (CF) débouchant d'une part entre le second clapet pilote (17') et le clapet d'étanchéité (19), et d'autre part à l'amont du système d'alimentation (S), de manière à permettre la circulation du carburant (C) via le clapet d'étanchéité (19) lorsque le second clapet pilote (17') est fermé.

11. Turbomoteur d'aéronef (6) comprenant une chambre de combustion (5) et un système d'alimentation (S) selon l'une des revendications 1 à 10, les injecteurs (1) du système d'alimentation (S) débouchant dans la chambre de combustion (5) de manière à l'alimenter en carburant (C).

12. Procédé d'alimentation en carburant (C) d'une chambre de combustion (5) dans un turbomoteur d'aéronef (6) au moyen du système d'alimentation (S) selon l'une des revendications 1 à 10, le procédé comprenant :
• une étape de commande (E1) de la vanne de répartition (20) suivant le régime du turbomoteur d'aéronef (6), au moyen de l'organe de commande (3),
• une étape de répartition (E2) du carburant (C) entre le circuit primaire (21) et le circuit secondaire (22), au moyen de la vanne de répartition (20) et
• une étape d'injection (E3) du carburant (C) dans la chambre de combustion (5), au moyen des injecteurs (1),
• procédé dans lequel, pour tout régime du turbomoteur d'aéronef (6), une fois le turbomoteur (6) démarré, la vanne de répartition (20) guide du carburant (C) à la fois dans le circuit primaire (21) et dans le circuit secondaire (22) lors de l'étape de répartition (E2).

## Patentansprüche

1. System (S) für die Versorgung mit Kraftstoff (C) einer Brennkammer (5) in einem Flugzeug-Turbinentriebwerk (6), wobei das Versorgungssystem (S) umfasst:
• eine Vielzahl von Einspritzdüsen (1), die ausgelegt sind, um den Kraftstoff (C) in die Brennkammer (5) einzuspritzen, wobei jede Einspritzdüse (1) in Form einer dreistufigen Einspritzdüse mit einer ersten Vorsteuerstufe (10), einer zweiten Vorsteuerstufe (16) und einer Hauptstufe (13) vorliegt, wobei die erste Vorsteuerstufe (10) und die zweite Vorsteuerstufe (16) jeweils ein erstes Vorsteuerventil (11) und ein zweites Vorsteuerventil (17, 17') umfassen, die jeweils ausgelegt sind, um einen permanenten Kraftstoffstrom (C) zirkulieren zu lassen, wobei die Hauptstufe (13) ein Hauptventil (14) umfasst, das ausgelegt ist, um einen intermittierenden Kraftstoffstrom (C) zirkulieren zu lassen, um die Versorgung der Brennkammer (5) entsprechend der Drehzahl des Flugzeug-Turbinentriebwerks (6) anzupassen,
• eine Vorrichtung (2) zur Verteilung des Kraftstoffs (C) in den Einspritzdüsen (1), die in Form einer Zweikreis-Verteilungsvorrichtung vorliegt, die einen Primärkreislauf (21) und einen Sekundärkreislauf (22) umfasst, wobei der Primärkreislauf (21) mit der ersten Vorsteuerstufe (10) und der Hauptstufe (13) verbunden ist, der Sekundärkreislauf (22) mit der zweiten Vorsteuerstufe (16) verbunden ist, wobei die Verteilungsvorrichtung (2) ein Verteilungsventil (20) umfasst, das ausgelegt ist, um den Kraftstoff (C) zwischen dem Primärkreislauf (21) und dem Sekundärkreislauf (22) zu verteilen, und
• ein Steuerorgan (3) für das Verteilungsventil (20) entsprechend der Drehzahl des Flugzeug-Turbinentriebwerks (6).

2. Versorgungssystem (S) nach Anspruch 1, wobei die erste Vorsteuerstufe (10), die zweite Vorsteuerstufe (16) und die Hauptstufe (13) jeweils eine erste Vorsteuerdüse (12), die vom ersten Vorsteuerventil (11) versorgt wird, eine zweite Vorsteuerdüse (18), die vom zweiten Vorsteuerventil (17, 17') versorgt wird und eine Hauptdüse (15), die vom Hauptventil (14) versorgt wird, umfassen, wobei die zweite Vorsteuerdüse (18) vorzugsweise eine Permeabilität (P18) aufweist, die größer als eine Permeabilität (P12) der ersten Vorsteuerdüse (12) und vorzugsweise kleiner als eine Permeabilität (P15) der Hauptdüse (15) ist.

3. Versorgungssystem (S) nach Anspruch 2, wobei die erste Vorsteuerdüse (12) vom aerodynamischen Einspritztyp ist und zum Einspritzen eines Kraftstoffsprays (C) in die Brennkammer (5) ausgelegt ist, wobei die erste Vorsteuerdüse (12) vorzugsweise in der Mitte jeder Einspritzdüse (1) positioniert ist.

4. Versorgungssystem (S) nach einem der Ansprüche 2 und 3, wobei die zweite Vorsteuerdüse (18) vom aeromechanischen Einspritztyp ist und zum Einspritzen eines Kraftstoffsprays (C) in die Brennkammer (5) ausgelegt ist, wobei die zweite Vorsteuerdüse (18) vorzugsweise peripher in jeder Einspritzdüse (1), vorzugsweise um die erste Vorsteuerdüse (12) herum, positioniert ist.

5. Versorgungssystem (S) nach einem der Ansprüche 2 bis 4, wobei die Hauptdüse (15) in Form einer Mehrpunktdüse mit einer Vielzahl von Einspritzpunkten vorliegt, wobei die Einspritzpunkte vorzugsweise peripher in jeder Einspritzdüse (1), vorzugsweise um die erste Vorsteuerdüse (12) herum, positioniert sind.

6. Versorgungssystem (S) nach einem der Ansprüche 1 bis 5, wobei das erste Vorsteuerventil (11) ein Dichtventil ist, das vorzugsweise keine Dosierfunktion hat.

7. Versorgungssystem (S) nach einem der Ansprüche 1 bis 6, wobei das Hauptventil (14) eine Tarierung (T14) aufweist, die größer ist als eine Tarierung (T11) des ersten Vorsteuerventils (11), so dass eine Kraftstoffmenge (C) nur oberhalb eines vorbestimmten Drucks in der Hauptstufe (13) abgegeben wird.

8. Versorgungssystem (S) nach einem der Ansprüche 1 bis 7, wobei das erste Vorsteuerventil (11) eine Tarierung (T11) aufweist, die im Wesentlichen gleich einer Tarierung (T17) des zweiten Vorsteuerventils (17) ist.

9. Versorgungssystem (S) nach einem der Ansprüche 1 bis 8, wobei das zweite Vorsteuerventil (17') ein Dosierventil ist und die zweite Vorsteuerstufe (16) ein Dichtventil (19) umfasst, wobei das zweite Vorsteuerventil (17') vorzugsweise stromabwärts des Dichtventils (19) positioniert ist, wobei das zweite Vorsteuerventil (17') vorzugsweise eine Tarierung (T17') aufweist, die größer ist als eine Tarierung (T19) des Dichtventils (19).

10. Versorgungssystem (S) nach Anspruch 9, wobei die zweite Vorsteuerstufe (16) eine Anti-Verkokungsleitung (CF) umfasst, die einerseits zwischen dem zweiten Vorsteuerventil (17') und dem Dichtventil (19) und andererseits stromaufwärts des Versorgungssystems (S) mündet, so dass die Zirkulation des Kraftstoffs (C) über das Dichtventil (19) ermöglicht wird, wenn das zweite Vorsteuerventil (17') geschlossen ist.

11. Flugzeug-Turbinentriebwerk (6), umfassend eine Brennkammer (5) und ein Versorgungssystem (S) nach einem der Ansprüche 1 bis 10, wobei die Einspritzdüsen (1) des Versorgungssystems (S) in die Brennkammer (5) münden, um diese mit Kraftstoff (C) zu versorgen.

12. Verfahren für die Versorgung mit Kraftstoff (C) einer Brennkammer (5) in einem Flugzeug-Turbinentriebwerk (6) mittels des Versorgungssystems (S) nach einem der Ansprüche 1 bis 10, wobei das Verfahren umfasst:
• einen Schritt des Steuerns (E1) des Verteilungsventils (20) entsprechend der Drehzahl des Flugzeug-Turbinentriebwerks (6) mittels des Steuerorgans (3),
• einen Schritt des Verteilens (E2) des Kraftstoffs (C) zwischen dem Primärkreislauf (21) und dem Sekundärkreislauf (22) mittels des Verteilungsventils (20) und
• einen Schritt des Einspritzens (E3) des Kraftstoffs (C) in die Brennkammer (5) mittels der Einspritzdüsen (1),
• wobei bei dem Verfahren, bei dem für jede Drehzahl des Flugzeug-Turbinentriebwerks (6), sobald das Triebwerk (6) gestartet ist, das Verteilungsventil (20) während des Verteilerschritts (E2) Kraftstoff (C) sowohl in den Primärkreislauf (21) als auch in den Sekundärkreislauf (22) leitet.

## Claims

1. A supply system (S) with fuel (C) for a combustion chamber (5) in an aircraft turboshaft engine (6), said supply system (S) comprising:
- a plurality of injectors (1) configured to inject fuel (C) into the combustion chamber (5), each injector (1) being in the form of a three-stage injector comprising a first pilot stage (10), a second pilot stage (16) and a main stage (13), the first pilot stage (10) and the second pilot stage (16) respectively comprising a first pilot valve (11) and a second pilot valve (17, 17') each configured to circulate a permanent flow rate of fuel (C), the main stage (13) comprising a main valve (14) configured to circulate an intermittent flow rate of fuel (C), so as to adapt supply to the combustion chamber (5) according to the speed of the aircraft turboshaft engine (6),
- a distribution device (2) for distributing the fuel (C) in the injectors (1) being in the form of a dual-circuit distribution device comprising a primary circuit (21) and a secondary circuit (22), the primary circuit (21) being connected to the first pilot stage (10) and the main stage (13), the secondary circuit (22) being connected to the second pilot stage (16), the distribution device (2) comprising a distribution valve (20) configured to distribute the fuel (C) between the primary circuit (21) and the secondary circuit (22), and
- a member for controlling (3) the distribution valve (20) according to the speed of the aircraft turboshaft engine (6).

2. The supply system (S) according to claim 1, wherein the first pilot stage (10), the second pilot stage (16) and the main stage (13) respectively comprise a first pilot nozzle (12) supplied by the first pilot valve (11), a second pilot nozzle (18) supplied by the second pilot valve (17, 17') and a main nozzle (15) supplied by the main valve (14), the second pilot nozzle (18) preferably having a permeability (P18) greater than a permeability (P12) of the first pilot nozzle (12), and more preferably less than a permeability (P15) of the main nozzle (15).

3. The supply system (S) according to claim 2, wherein the first pilot nozzle (12) is of the aerodynamic injection type and configured to inject spray of fuel (C) into the combustion chamber (5), said first pilot nozzle (12) preferably being positioned in the center of each injector (1).

4. The supply system (S) according to any of claims 2 and 3, wherein the second pilot nozzle (18) is of the aeromechanical injection type and configured to inject spray of fuel (C) into the combustion chamber (5), said second pilot nozzle (18) preferably being positioned peripherally in each injector (1), more preferably around the first pilot nozzle (12).

5. The supply system (S) according to any of claims 2 to 4, wherein the main nozzle (15) is in the form of a multipoint nozzle comprising a plurality of injection points, said injection points preferably being positioned peripherally in each injector (1), more preferably around the first pilot nozzle (12).

6. The supply system (S) according to any of claims 1 to 5, wherein the first pilot valve (11) is a seal valve, preferably free of a metering function.

7. The supply system (S) according to any of claims 1 to 6, wherein the main valve (14) has a cracking pressure (T14) greater than a cracking pressure (T11) of the first pilot valve (11), so as to deliver a flow rate of fuel (C) only above a predetermined pressure in the main stage (13).

8. The supply system (S) according to any of claims 1 to 7, wherein the first pilot valve (11) comprises a cracking pressure (T11) substantially equal to a cracking pressure (T17) of the second pilot valve (17).

9. The supply system (S) according to any of claims 1 to 8, wherein the second pilot valve (17') is a metering valve and the second pilot stage (16) comprises a seal valve (19), said second pilot valve (17') preferably being positioned downstream of the seal valve (19), said second pilot valve (17') more preferably comprising a cracking pressure (T17') greater than a cracking pressure(T19) of the seal valve (19).

10. The supply system (S) of claim 9, wherein the second pilot stage (16) comprises an anti-coking conduit (CF) opening on the one hand between the second pilot valve (17') and the seal valve (19) and on the other hand upstream of the supply system (S), so as to allow fuel (C) to circulate via the seal valve (19) when the second pilot valve (17') is closed.

11. An aircraft turboshaft engine (6) comprising a combustion chamber (5) and a supply system (S) according to any of claims 1 to 10, the injectors (1) of the supply system (S) opening into the combustion chamber (5) so as to supply it with fuel (C).

12. A method for supplying a combustion chamber (5) in an aircraft turboshaft engine (6) with fuel (C) by means of the supply system (S) according to one of claims 1 to 10, the method comprising:
- a step of controlling (E1) the distribution valve (20) according to the speed of the aircraft turboshaft engine (6), by means of the control member (3),
- a step of distributing (E2) the fuel (C) between the primary circuit (21) and the secondary circuit (22), by means of the distribution valve (20) and
- a step of injecting (E3) the fuel (C) into the combustion chamber (5), by means of the injectors (1),
- in which method, at any speed of the aircraft turboshaft engine (6), once the turboshaft engine (6) is started, the distribution valve (20) guides fuel (C) into both the primary circuit (21) and the secondary circuit (22) during the distribution step (E2).
